# EUROPEAN PATENT APPLICATION

(11) **EP 4 651 339 A1**
(43) Date of publication of application: **19.11.2025**
(21) Application number: 24756703.5
(22) Date of filing: 02.02.2024
(51) Int. Cl.: H02J 7/02, H02J 7/00

(54) **CHARGING APPARATUS, ELECTRONIC DEVICE, CHARGING SYSTEM, CHARGING METHOD, AND COMMUNICATION METHOD**

(30) Priority: 16.02.2023 JP 2023022447; 21.09.2023 JP 2023156226
(71) Applicant: JVCKenwood Corporation, Yokohama-shi, Kanagawa 2210022 (JP)
(72) Inventor: OTSUHATA, Hiroshi, Yokohama-shi, Kanagawa 221-0022 (JP)
(74) Representative: Schmidbauer, Andreas Konrad
(86) International application number: PCT/JP2024/003542
(87) International publication number: WO 2024/171853

(57) **Abstract**

A charging device includes: a charging unit configured to charge an electronic device; a remaining electrical power value information acquisition unit configured to acquire information on a remaining electrical power value of a rechargeable battery provided in the own charging device; an electronic device information acquisition unit configured to acquire electronic device information that includes identification information on the electronic device and information on a remaining battery level value of a battery provided in the electronic device from each of the electronic devices through wireless communication; a charging target information acquisition unit configured to acquire, when a charging target device among the electronic devices is connected to the charging unit, charging target information that includes at least the identification information on the charging target device; and a charging management unit configured to generate charging information that includes battery charging priority related to charging of the charging target device based on the information on the remaining electrical power value, the electronic device information, and the identification information included in the charging target information.

## Description

### Field

The present disclosure relates a charging device, an electronic device, a charging system, a charging method, and a communication method.

### Background

There is a known technology that implements charging performed by taking into account a state of each electronic device while multiple electronic devices are being connected (for example, see Patent Literature 1).

### Citation List

### Patent Literature

Patent Literature 1: Japanese Laid-open Patent Publication No. 2011-135679

### Summary

The technology described in Patent Literature 1 performs charging by determining the state of each of the electronic devices connected to a charging device. Thus, conventionally, in a case where multiple charging target devices that are not connected to the charging device are present, the charging may not be implemented appropriately.

An object of the present disclosure is to provide a charging device, an electronic device, a charging system, a charging method, and a communication method capable of efficiently charging an electronic device that is to be managed.

According to one aspect of the present disclosure, there is provided a charging device comprising:
a charging unit configured to charge an electronic device;
a remaining electrical power value information acquisition unit configured to acquire information on a remaining electrical power value of a rechargeable battery provided in the own charging device; an electronic device information acquisition unit configured to acquire electronic device information that includes identification information on the electronic device and information on a remaining battery level value of a battery provided in the electronic device from each of the electronic devices through wireless communication; a charging target information acquisition unit configured to acquire, when a charging target device among the electronic devices is connected to the charging unit, charging target information that includes at least the identification information on the charging target device; and a charging management unit configured to generate charging information that includes battery charging priority related to charging of the charging target device based on the information on the remaining electrical power value, the electronic device information, and the identification information included in the charging target information.

According to one aspect of the present disclosure, there is provided an electronic device comprising: a location information acquisition unit configured to acquire location information on the own electronic device; a remaining battery level information acquisition unit configured to acquire information on a remaining battery level value of a battery provided in the own electronic device; a communication unit configured to receive communication signals that include identifiers of other electronic devices communicated thereamong and the location information on the other electronic devices; a communication controller configured to control the communication unit to cause the communication unit to transmit a communication signal that includes the identifier of the own electronic device and the information on the remaining battery level value of the own electronic device; and a transmission destination decision unit configured to select, when the remaining battery level value of the own electronic device is less than a threshold that is set in advance, the other electronic device located at a shortest distance from the own electronic device as a transmission destination electronic device based on the location information on the own electronic device located at a time point when the remaining battery level value of the own electronic device becomes less than the threshold and based on the location information on the other electronic device, wherein the communication controller is further configured to: decide a transmission output value of the communication unit based on the distance from the transmission destination electronic device, and cause the communication unit to transmit a notification signal that includes the identifier of the own electronic device and the information on the remaining battery level value of the own electronic device from the communication unit to the transmission destination electronic device at the decided transmission output value.

According to one aspect of the present disclosure, there is provided a charging system comprising: a charging device; electronic devices that are able to communicate with the charging device, wherein the charging device includes: a charging unit configured to charge the electronic device, a remaining electrical power value information acquisition unit configured to acquire information on a remaining electrical power value of a rechargeable battery provided in the own charging device, an electronic device information acquisition unit configured to acquire electronic device information that includes identification information on the electronic device and information on a remaining battery level value of a battery provided in the electronic device from each of the electronic devices through wireless communication, a charging target information acquisition unit configured to acquire, when a charging target device among the electronic devices is connected to the charging unit, charging target information that includes at least the identification information on the charging target device, and a charging management unit configured to generate charging information that includes battery charging priority related to charging of the charging target device based on the information on the remaining electrical power value, the electronic device information, and the identification information included in the charging target information.

According to one aspect of the present disclosure, there is provided a charging method comprising: a step of acquiring information on a remaining electrical power value of a rechargeable battery provided in a charging device; a step of acquiring, from each of electronic devices through wireless communication, electronic device information that includes identification information on the electronic device and information on a remaining battery level value of a battery provided in the electronic device; a step of acquiring, when a charging target device among the electronic devices is connected to the charging device that performs charging the charging target device, charging target information that includes identification information on the charging target device and information on the remaining battery level value on the charging target device; and a step of generating charging information that includes battery charging priority related to charging of the charging target device based on the information on the remaining electrical power value, the electronic device information, and the identification information included in the charging target information.

According to one aspect of the present disclosure, there is provided a communication method on an electronic device comprising: a step of acquiring location information on the own electronic device; a step of acquiring information on a remaining battery level value of a battery provided in the own electronic device; a step of receiving, by a communication unit, communication signals transmitted by the other electronic device that include identifiers of other electronic devices and location information on the other electronic devices; a step of controlling the communication unit to cause the communication unit to transmit the communication signal that includes the identifier of the own electronic device and the information on the remaining battery level value of the own electronic device; a step of selecting, when the remaining battery level value of the own electronic device is less than a threshold that is set in advance, the other electronic device located at a shortest distance from the own electronic device as a transmission destination electronic device based on the location information on the own electronic device located at a time point when the remaining battery level value of the own electronic device becomes less than the threshold and based on the location information on the other electronic device; and a step of deciding a transmission output value of the communication unit based on a distance from the transmission destination electronic device, and causing the communication unit to transmit a notification signal that includes the identifier of the own electronic device and the information on the remaining battery level value of the own electronic device from the communication unit to the transmission destination electronic device at the decided transmission output value.

According to the present disclosure, it is possible to appropriately charge multiple electronic devices.

### Brief Description of Drawings

FIG. 1 is a diagram illustrating an example of a configuration of a charging system according to a first embodiment;
FIG. 2 is a diagram for explaining an outline of a process performed in the charging system according to the first embodiment;
FIG. 3 is a block diagram illustrating an example of a configuration of a charging device according to the first embodiment;
FIG. 4 is a diagram for explaining a method for connecting the charging device and an electronic device according to the first embodiment;
FIG. 5 is a diagram illustrating one example of electronic device information according to the first embodiment;
FIG. 6 is a flowchart illustrating a flow of an electronic device information acquisition process according to the first embodiment;
FIG. 7 is a flowchart illustrating a flow of a charging management process according to the first embodiment;
FIG. 8 is a flowchart illustrating a flow of a charging management process according to a second embodiment;
FIG. 9 is a flowchart illustrating a flow of a charging management process according to a third embodiment;
FIG. 10 is a block diagram illustrating an example of a configuration of a charging device according to a fourth embodiment;
FIG. 11 is a flowchart illustrating a flow of a notification process according to the fourth embodiment;
FIG. 12 is a block diagram illustrating an example of a configuration of an electronic device according to a fifth embodiment;
FIG. 13 is a sequence diagram illustrating a flow of processes performed in a charging system according to the fifth embodiment;
FIG. 14 is a flowchart illustrating a flow of a first process performed in an electronic device according to the fifth embodiment;
FIG. 15 is a flowchart illustrating a flow of a second process performed in the electronic device according to the

### fifth embodiment; and

FIG. 16 is a block diagram illustrating an example of a configuration of an electronic device according to a modification of the fifth embodiment.

### Description of Embodiments

Preferred embodiments of the present disclosure will be explained in detail with reference to accompanying drawings. Furthermore, the present disclosure is not limited to the embodiments described below, and, in addition, in the embodiments described below, the same components are denoted by the same reference numerals and an overlapping description thereof will be omitted.

### [First Embodiment]

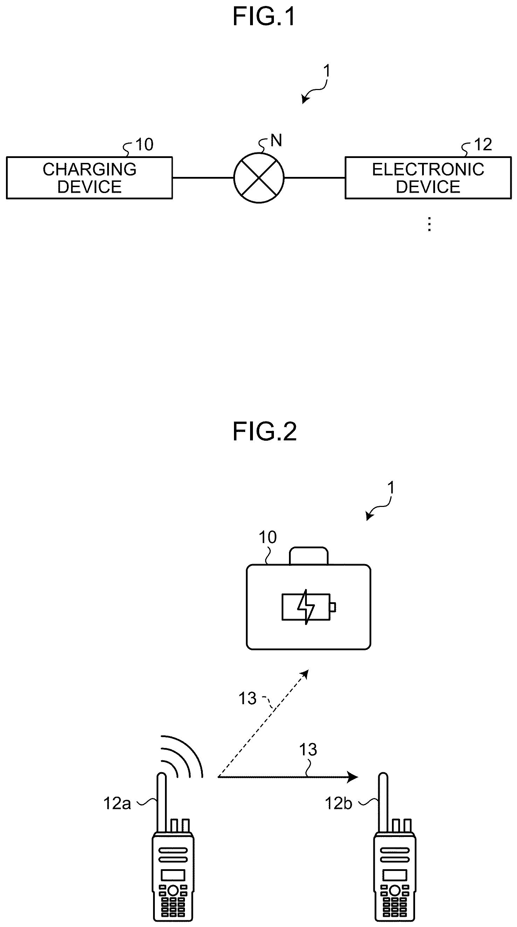

An example of a configuration of a charging system according to a first embodiment will be described with reference to FIG. 1. FIG. 1 is a diagram illustrating an example of a configuration of a charging system according to the first embodiment.

As illustrated in FIG. 1, a charging system 1 includes a charging device 10 and multiple electronic devices 12.

The charging device 10 is a charging device that charges a battery provided in each of the electronic devices 12. The charging device 10 is, for example, a charging device with a portable type available for use outdoors, but is not limited to this example. The charging device 10 has a communication function that enables the charging device 10 to communicate with each of the electronic devices 12.

Each of the electronic devices 12 is an electronic device that has a communication function that enables the electronic device 12 to communicate with the charging device 10. The electronic device 12 is, for example, a wireless communication terminal for business use, a smartphone, a tablet terminal, a mobile phone, or the like, but is not limited to these examples.

The charging device 10 and the electronic device 12 are communicably connected with each other via a network N. The network N is a wireless communication network, the Internet network, a mobile phone network, or the like, but is not limited to these examples.

FIG. 2 is a diagram illustrating an outline of a process performed in a charging system according to the first embodiment. In the example illustrated in FIG. 2, as the electronic devices 12, a wireless terminal 12a and a wireless terminal 12b are illustrated. The wireless terminal 12a transmits a transmission signal 13 to the wireless terminal 12b, and starts communication with the wireless terminal 12b. At this time, the wireless terminal 12a allows the transmission signal 13 to include electronic device information that includes both of a terminal ID for identifying the own electronic device and remaining battery level information related to a remaining level of a battery.

The charging device 10 acquires the remaining battery level information that is related to the wireless terminal 12a and that is included in the transmission signal 13 by always receiving the transmission signal 13. Furthermore, the wireless terminal 12a may be configured to transmit the transmission signal 13 to the charging device 10. The charging device 10 acquires the remaining battery level information from each of the wireless terminals, and determines the battery charging priority that indicates a priority order of the charging to be performed on the wireless terminal 12a and the wireless terminal 12b. As a result of this, the charging device 10 is able to appropriately charge both of the wireless terminal 12a and the wireless terminal 12b.

### [Charging device]

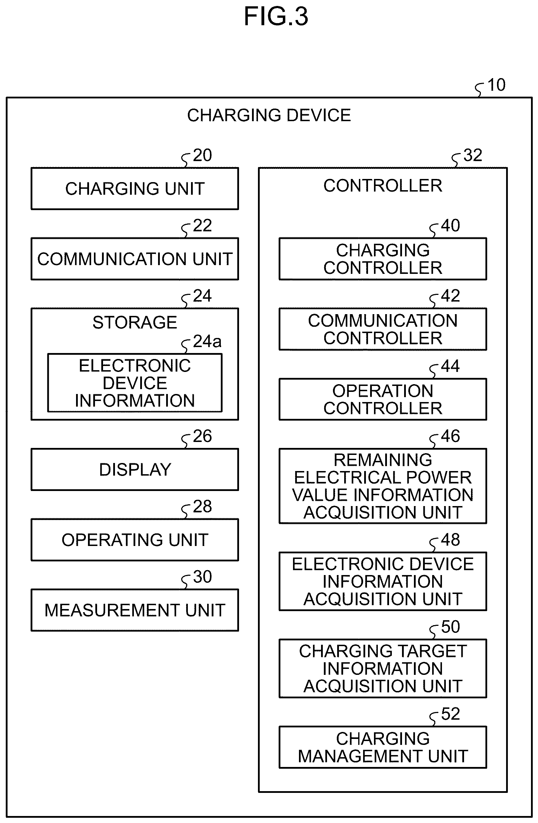

An example of a configuration of the charging device according to the first embodiment will be described with reference to FIG. 3. FIG. 3 is a block diagram illustrating an example of a configuration of the charging device according to the first embodiment.

As illustrated in FIG. 3, the charging device 10 includes a charging unit 20, a communication unit 22, a storage 24, a display 26, an operating unit 28, a measurement unit 30, and a controller 32.

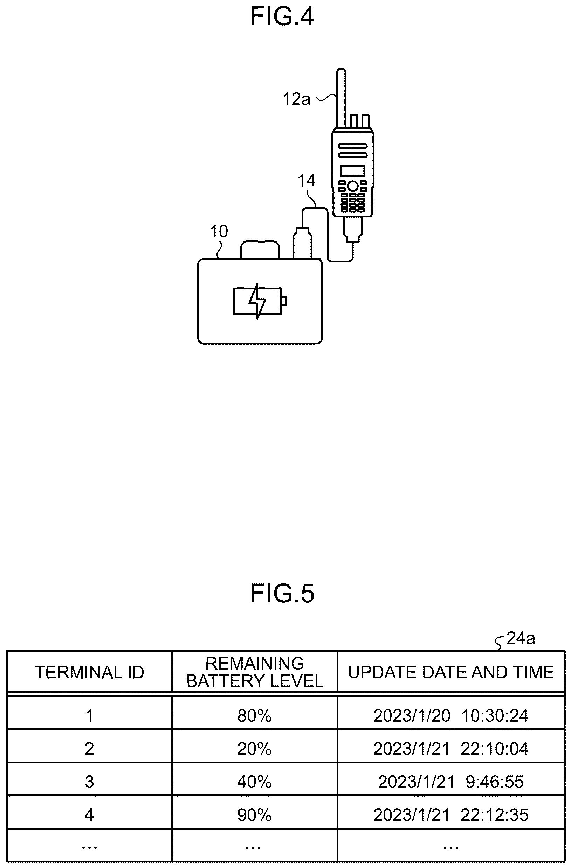

The charging unit 20 is configured to charge the battery that is provided in the electronic device 12 and that is connected to the charging device 10. The charging unit 20 includes a battery (rechargeable battery), or the like that stores electrical power to charge the battery included in the electronic device. FIG. 4 is a diagram for explaining a method for connecting the charging device and the electronic device according to the first embodiment. As illustrated in FIG. 4, the charging device 10 and the wireless terminal 12a are connected by, for example, a connection cable 14. The charging unit 20 charges the battery provided in the wireless terminal 12a by supplying electrical power to the battery included in the wireless terminal 12a via the connection cable 14. Furthermore, the charging unit 20 may be configured to charge the battery included in the electronic device 12 in a non-contact manner by bringing the electronic device 12 closer to the charging device 10, but the configuration of the charging unit 20 is not limited to this configuration.

The communication unit 22 is a communication interface that performs communication between the charging device 10 and an external device. The communication unit 22 performs communication between, for example, the charging device 10 and the electronic device 12.

The storage 24 stores therein various kinds of information. The storage 24 stores therein content of arithmetic calculation performed in the controller 32, information on a program, and the like. The storage 24 includes at least one of, for example, a main storage device, such as a random access memory (RAM) or a read only memory (ROM), and an external storage device, such as a hard disk drive (HDD).

The storage 24 stores therein electronic device information 24a. FIG. 5 is a diagram illustrating one example of the electronic device information according to the first embodiment. As illustrated in FIG. 5, the electronic device information 24a includes items, such as a "terminal ID", a "remaining battery level", and an "update date and time".

The "terminal ID" indicates identification information for uniquely identifying each of the electronic devices 12. The "remaining battery level" indicates the remaining battery level information that is related to a remaining amount of the battery provided in the corresponding electronic device 12. The "update date and time" indicates date and time information that is related to the date and time on which the remaining battery level information is acquired from the corresponding electronic device 12. For example, it is indicated that the remaining battery level of the electronic device 12 indicated by a terminal ID1 at a time point at 10:30:24 on 2023/1/20 is 80% of a fully charged level.

The display 26 displays various kinds of images. The display 26 is a display including, for example, a liquid crystal display, an organic electro-luminescence (EL), or the like.

The operating unit 28 receives various kinds of operations performed on the charging device 10. The operating unit 28 receives a charging start operation performed by, for example, a user with respect to the electronic device 12. The operating unit 28 is implemented by a switch, a button, a touch panel, and the like.

The measurement unit 30 measures a remaining electrical power value of the battery provided in the charging device 10.

The controller 32 controls each of the units included in the charging device 10. The controller 32 includes, for example, an information processing apparatus, such as a Central Processing Unit (CPU) or a micro processing unit (MPU), and a storage device, such as a random access memory (RAM) or a read only memory (ROM). The controller 32 performs a program that controls an operation of the charging device 10. The controller 32 may be implemented by, for example, an integrated circuit, such as an application specific integrated circuit (ASIC) or a field programmable gate array (FPGA). The controller 32 may be implemented by a combination of hardware and software.

The controller 32 includes a charging controller 40, a communication controller 42, an operation controller 44, a remaining electrical power value information acquisition unit 46, an electronic device information acquisition unit 48, a charging target information acquisition unit 50, and a charging management unit 52.

The charging controller 40 controls an operation of the charging unit 20. The charging controller 40 controls the charging unit 20, and causes the charging unit 20 to charge the battery that is provided in the electronic device 12 and that is connected to the charging unit 20.

The communication controller 42 controls the communication unit 22, and controls communication to be performed between the charging device 10 and an external device. The communication controller 42 controls, for example, the communication unit 22, and causes the communication unit 22 to receive the transmission signal that has been transmitted by the electronic device 12. The communication controller 42 controls, for example, the communication unit 22, and causes the communication unit 22 to transmit the transmission signal to the electronic device 12.

The operation controller 44 receives various kinds of operation information received by the operating unit 28. The operation controller 44 receives a charging start operation to start charging the electronic device 12 accepted by, for example, the operating unit 28.

The remaining electrical power value information acquisition unit 46 acquires remaining electrical power value information that is related to remaining electrical power of the battery provided in the charging device 10. The remaining electrical power value information acquisition unit 46 acquires the remaining electrical power value information on the battery provided in the charging device 10 from, for example, the measurement unit 30.

The electronic device information acquisition unit 48 acquires the electronic device information that includes the identification information on the electronic device 12 and the remaining battery level information from the multiple electronic devices 12 by using the wireless communication. The electronic device information acquisition unit 48 acquires the electronic device information that is included in the transmission signal that has been received by, for example, the communication unit 22 from the electronic device 12. The electronic device information acquisition unit 48 causes the storage 24 to store, as the electronic device information 24a, in an associated manner, the identification information, the remaining battery level information, and an acquisition date of the identification information and the remaining battery level information.

The charging target information acquisition unit 50 determines that the electronic device 12 that is connected to the charging unit 20 is a charging target device from among the multiple electronic devices 12. The charging target information acquisition unit 50 acquires, via the connection cable 14 (see FIG. 4), the charging target information that includes the identification information on the charging target device and the remaining battery level information.

The charging management unit 52 determines the battery charging priority related to the charging of the electronic devices 12 based on the remaining electrical power value information that has been acquired by the remaining electrical power value information acquisition unit 46, based on the electronic device information 24a that is stored in the storage 24, and based on the charging target information that has been acquired by the charging target information acquisition unit 50. The charging management unit 52 determines that, for example, the battery charging priority is higher for the electronic device 12 that has a lower remaining battery level. The charging management unit 52 generates the charging information that includes the battery charging priority and that is related to the charging of the charging target device based on the remaining electrical power value information that has been acquired by the remaining electrical power value information acquisition unit 46, based on the electronic device information 24a that is stored in the storage 24, and based on the charging target information that has been acquired by the charging target information acquisition unit 50. The charging management unit 52 provides the generated charging information to the user.

### (Electronic device information acquisition process)

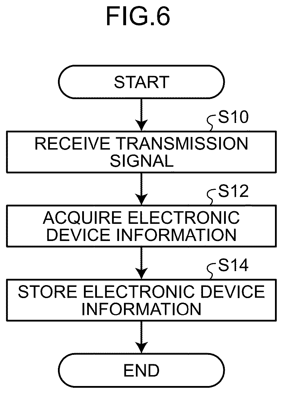

An electronic device information acquisition process according to the first embodiment will be described with reference to FIG. 6. FIG. 6 is a flowchart illustrating a flow of the electronic device information acquisition process according to the first embodiment.

The communication controller 42 controls the communication unit 22, and causes the communication unit 22 to receive the transmission signal that has been transmitted by the electronic device 12 (Step S10). Then, the process proceeds to Step S12.

The electronic device information acquisition unit 48 acquires the electronic device information (Step S12). Specifically, the electronic device information acquisition unit 48 acquires the electronic device information that is related to the electronic device 12 and that is included in the transmission signal that has been received by the communication unit 22. Then, the process proceeds to Step S14.

The electronic device information acquisition unit 48 associates an acquisition date and time with the acquired electronic device information, and causes the storage 24 to store the associated information as the electronic device information 24a (Step S14). Then, the electronic device information acquisition unit 48 ends the process illustrated in FIG. 6.

### (Charging management process)

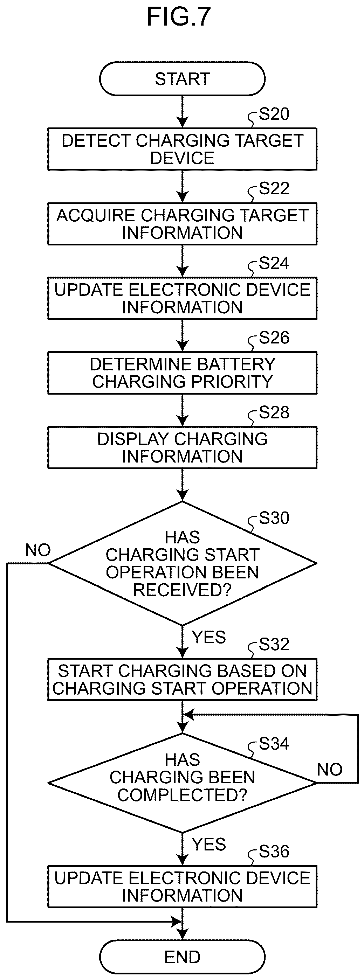

A charging management process according to the first embodiment will be described with reference to FIG. 7. FIG. 7 is a flowchart illustrating a flow of the charging management process according to the first embodiment.

The charging target information acquisition unit 50 detects the charging target device from among the multiple electronic devices 12 (Step S20). Specifically, the charging target information acquisition unit 50 detects the electronic device 12 that is connected to the charging unit 20 as the charging target device. Then, the process proceeds to Step S22.

The charging target information acquisition unit 50 acquires the charging target information that includes the identification information and the remaining battery level information from the charging target device (Step S22). Then, the process proceeds to Step S24.

The charging management unit 52 updates the electronic device information that is stored in the storage 24 (Step S24). Specifically, the charging management unit 52 updates the remaining battery level of the electronic device 12 having the same terminal ID as that of the charging target information to the remaining battery level that is included in the charging target information. Then, the process proceeds to Step S26.

The charging target information acquisition unit 50 determines the battery charging priority of the charging target device (Step S26). Then, the process proceeds to Step S28.

The charging management unit 52 causes the display 26 to display the charging information that includes the battery charging priority of the charging target device (Step S28). Specifically, the charging management unit 52 causes the display 26 to display the charging information that prompts the user to stop charging the charging target device. The charging management unit 52 causes the display 26 to display a character string indicating that, for example, "There is the electronic device 12 that has a higher battery charging priority than your charging target device. Do you want to start charging?". The charging management unit 52 may cause the display 26 to display the charging information that includes the information that is related to the electronic device 12 whose remaining battery level is lower than that of, for example, the charging target device, and the information that is related to the remaining electrical power value of the charging device 10. The charging management unit 52 may cause the display 26 to display a character string indicating that, for example, "There are three other electronic devices 12 with lower remaining battery level than yours. The electronic device 12 with the lowest remaining battery level is the electronic device 12 that is identified by a terminal ID2, and whose remaining battery level is 20%. The charging device 10 has remaining electrical power enough to fully charge the two electronic devices 12. Do you want to start charging?".

The operation controller 44 determines whether or not the operating unit 28 has received a charging start operation from the user (Step S30). If it is determined that the charging start operation has been received (Yes at Step S30), the process proceeds to Step S32. If it is not determined that the charging start operation has been received (No at Step S30), the operation controller 44 ends the process illustrated in FIG. 7. In other words, in the first embodiment, in a case where the user does not input the charging start operation to the operating unit 28, or, in a case where an operation to stop charging is input to the operating unit 28, the operation controller 44 ends the process illustrated in FIG. 7 without charging the charging target device. As a result of stopping charging for the electronic device 12 with low battery charging priority, it is possible to effectively use the electrical power remaining in the battery in the charging device 10 with respect to the electronic device 12 with high battery charging priority.

If it is determined to be Yes at Step S30, the charging controller 40 starts charging to the charging target device based on the charging start operation that has been received by the operating unit 28 from the user (Step S32). Then, the process proceeds to Step S34.

The charging controller 40 determines whether or not the charging to the charging target device has been completed (Step S34). For example, in a case the battery provided in the charging target device has been fully charged, the charging controller 40 determines that the charging to the charging target device has been completed. If it is determined that the charging to the charging target device has been completed (Yes at Step S34), the process proceeds to Step S36. If it is not determined that the charging target device has been completed (No at Step S34), the process at Step S34 is repeated.

If it is determined to be Yes at Step S34, the charging management unit 52 updates the electronic device information 24a stored in the storage 24 (Step S36). Specifically, the charging management unit 52 updates the remaining battery level of the electronic device 12 that has the same terminal ID as that indicated by the charging target information to the remaining battery level after charging. Then, the charging management unit 52 ends the process illustrated in FIG. 7.

As described above, in the first embodiment, charging to the charging target device is started only in a case where the charging start operation has been received from the user, after the charging information that includes the battery charging priority of the charging target device has been exhibited to the user. As a result of this, in the first embodiment, it is possible to appropriately charge the multiple electronic devices.

### [Modification of the first embodiment]

In the first embodiment, the case in which the charging device 10 causes the display 26 to display the charging information has been described. However, the information displayed on the display 26 by the charging device 10 is not limited to the charging information.

The charging device 10 may also cause the display 26 to display the electronic device information 24a stored in the storage 24 in accordance with an operation performed by, for example, the user. As a result of this, the user is able to understand the remaining battery level of the respective electronic devices 12. As a result of this, the user is able to prompt the other user who uses the electronic device 12 that has lower remaining battery level than that of the other electronic devices 12 to charge the electronic device 12. Consequently, the modification according to the first embodiment is able to appropriately charge the multiple electronic devices.

### [Second Embodiment]

### (Charging management process)

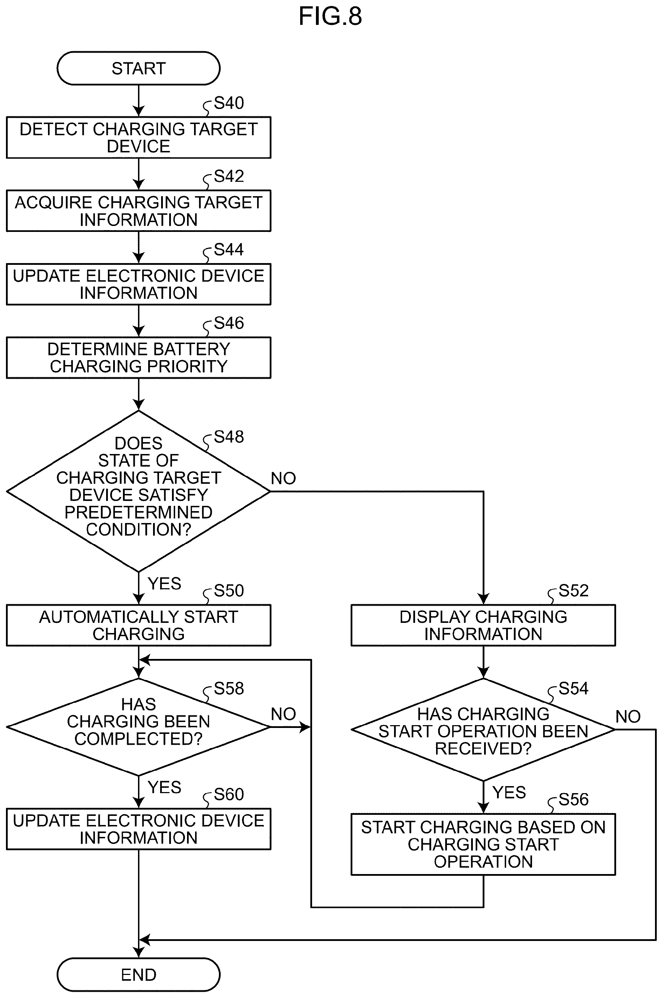

A charging management process according to a second embodiment will be described with reference to FIG. 8. FIG. 8 is a flowchart illustrating a flow of the charging management process according to the second embodiment. A configuration of a charging device according to the second embodiment is the same as the configuration of the charging device 10 illustrated in FIG. 3. Therefore, descriptions thereof will be omitted.

The processes performed at Step S40 to Step S46 are the same as the processes performed at Step S20 to Step S26, respectively, illustrated in FIG. 7. Therefore, descriptions thereof will be omitted.

The charging management unit 52 determines whether or not a state of the charging target device satisfies a predetermined condition (Step S48). For example, the charging management unit 52 may determine whether or not the battery charging priority of the charging target device is the highest. For example, the charging management unit 52 may determine whether or not the battery charging priority of the charging target device is a level equal or higher than a predetermined order. For example, the charging management unit 52 may determine whether or not the remaining battery level of the charging target device is equal or less than the predetermined level. The order equal to or higher than the predetermined order and the remaining battery level equal or less than the predetermined level may be changed in accordance with the remaining electrical power value of the battery provided in the charging device 10. For example, the charging management unit 52 may allow the charging device 10 having a smaller remaining electrical power value of the battery to have higher battery charging priority above the predetermined order, or may decrease the remaining battery level to a level equal to or less than the predetermined level. If it is determined that the state of the charging target device satisfies the predetermined condition (Yes at Step S48), the process proceeds to Step S50. If it is not determined that the state of the charging target device satisfies the predetermined condition (No at Step S48), the process proceeds to Step S52.

If it is determined to be Yes at Step S48, the charging controller 40 automatically starts charging to the charging target device (Step S50). In other words, in the second embodiment, in a case where the state of the charging target device satisfies the predetermined condition, the charging to the charging target device is automatically started without depending on the charging start operation to be performed by the user. Then, the process proceeds to Step S58.

The processes performed at Step S52 to Step S60 are the same as the processes performed at Step S28 to Step S36, respectively, illustrated in FIG. 7. Therefore, descriptions thereof will be omitted.

As described above, in the second embodiment, in a case where the state of the charging target device satisfies the predetermined condition, the charging to the charging target device is automatically started. In contrast, in the second embodiment, in a case where the state of the charging target device does not satisfy the predetermined condition, the charging to the charging target device is started only in a case where the charging start operation has been received from the user after the charging information including the battery charging priority of the charging target device has been provided to the user. As a result of this, in the second embodiment, it is possible to charge the multiple electronic devices more appropriately.

### [Third Embodiment]

### (Charging management process)

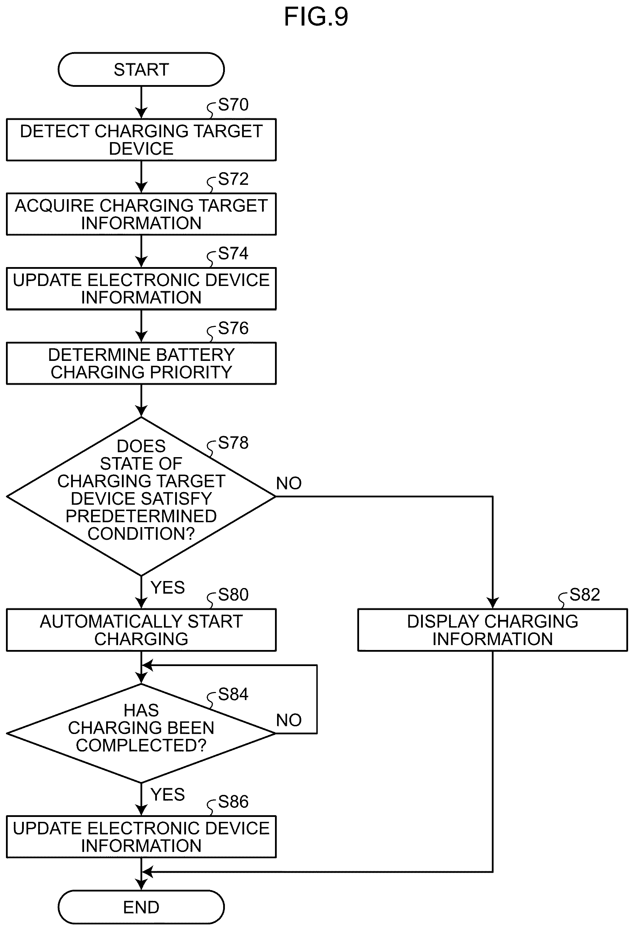

A charging management process according to a third embodiment will be described with reference to FIG. 9. FIG. 9 is a flowchart illustrating a flow of the charging management process according to the third embodiment. A configuration of a charging device according to the third embodiment is the same as the configuration of the charging device 10 illustrated in FIG. 3. Therefore, descriptions thereof will be omitted.

The processes performed at Step S70 to Step S80 are the same as the processes performed at Step S40 to Step S50, respectively, illustrated in FIG. 8. Therefore, descriptions thereof will be omitted.

The charging management unit 52 causes the display 26 to display the charging information including information indicating that the charging target device is not charged (Step S82). Specifically, the charging management unit 52 causes the display 26 to display a character string indicating that, for example, "The state of the charging target device does not satisfy the predetermined condition, so that charging is not performed.". Then, the charging management unit 52 ends the process illustrated in FIG. 9. In other words, in the third embodiment, in a case where the state of the charging target device does not satisfy the predetermined condition, the process illustrated in FIG. 9 ends without charging the battery provided in the charging device.

The processes performed at Step S84 to Step S86 are the same as the processes performed at Step S58 to Step S60, respectively, illustrated in FIG. 8. Therefore, descriptions thereof will be omitted.

As described above, in the third embodiment, in a case where the state of the charging target device satisfies the predetermined condition, the charging to the charging target device is automatically started. In contrast, in the third embodiment, in a case where the state of the charging target device does not satisfy the predetermined condition, the charging to the charging target device is automatically stopped. As a result of this, in the third embodiment, it is possible to charge the multiple electronic devices more appropriately.

### [Fourth Embodiment]

### (Charging device)

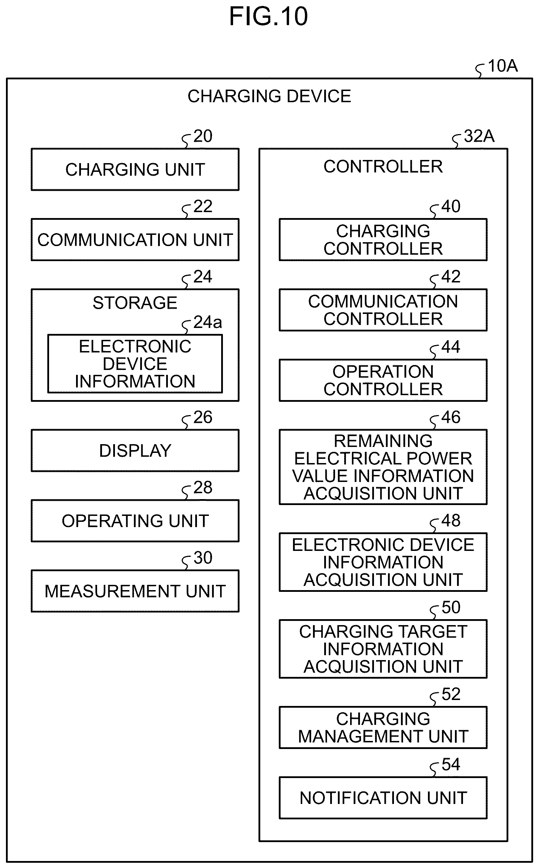

An example of a configuration of a charging device according to a fourth embodiment will be described with reference to FIG. 10. FIG. 10 is a block diagram illustrating an example of a configuration of the charging device according to the fourth embodiment.

As illustrated in FIG. 10, a charging device 10A is different from the charging device 10 illustrated in FIG. 3 in that a controller 32A includes a notification unit 54.

The notification unit 54 notifies the electronic device 12 of various kinds of information via the communication unit 22. The notification unit 54 notifies the electronic device 12 that is needed to be charged of the information that prompts charging via, for example, the communication unit 22.

### (Notification process)

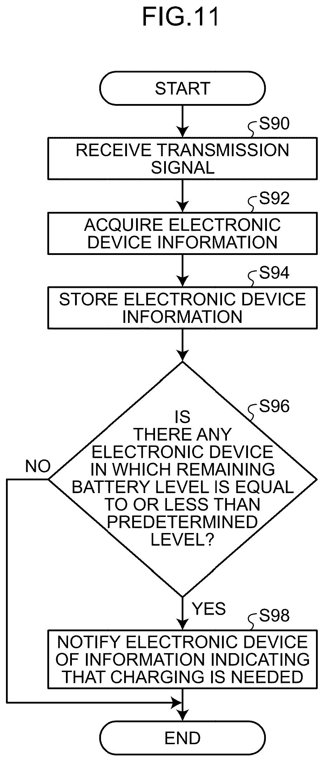

A notification process according to the fourth embodiment will be described with reference to FIG. 11. FIG. 11 is a flowchart illustrating a flow of the notification process according to the fourth embodiment.

The processes performed at Step S90 to Step S94 are the same as the processes performed at Step S10 to Step S14, respectively, illustrated in FIG. 6. Therefore, descriptions thereof will be omitted.

The charging management unit 52 determines whether or not the electronic device 12 in which the remaining battery level is equal to or less than the predetermined level is present (Step S96). Specifically, the charging management unit 52 determines whether or not the electronic device in which the remaining battery level is equal to or less than the predetermined level is present, based on the remaining electrical power value of the battery provided in the charging device 10 and based on the electronic device information 24a stored in the storage 24. If it is determined that the electronic device in which the remaining battery level is equal to or less than the predetermined level is present (Yes at Step S96), the process proceeds to Step S98. If it is not determined that the electronic device in which the remaining battery level is equal to or less than the predetermined level is present (No at Step S96), the charging management unit 52 ends the process illustrated in FIG. 11.

If it is determined to be Yes at Step S96, the notification unit 54 notifies, via the communication unit 22, the electronic device 12 in which the remaining battery level is equal to or less than the predetermined level of the information indicating that charging is needed (Step S98). Specifically, the notification unit 54 notifies the electronic device 12 of the information for causing the display 26 included in the electronic device 12 to display a character string indicating that, for example, "The remaining battery level is getting low. Please charge the battery.". The notification unit 54 may notify the electronic device 12 of the information indicating that, for example, the remaining electrical power value of the battery provided in the charging device 10 is equal to or less than the predetermined value and, the electronic device 12 is less likely to be charged. Then, the process illustrated in FIG. 11 has been completed.

As described above, in the fourth embodiment, the information indicating that the electronic device 12 in which the remaining battery level is equal to or less than the predetermined level needs to be charged is notified. As a result of this, the user who uses the electronic device 12 in which the remaining battery level is equal to or less than the predetermined level is able to understand that the charging is needed to be performed on the electronic device 12 that is being used by the user, so that it is possible to appropriately cause the electronic device 12 having a low remaining battery level to be charged.

### [Fifth Embodiment]

A fifth embodiment will be described. According to the embodiments described above, the charging device receives a communication signal that is communicated between the electronic devices and that includes the remaining battery level information, for example, a transmission signal generated by a call, and then acquires the remaining battery level information on the electronic device. In other words, communication for only acquiring the remaining battery level information is not generated. As a result of this, the battery provided in the electronic device is not consumed in order to notify the charging device of the remaining battery level information. On the other hand, the charging device is not able to acquire the remaining battery level information on the electronic device that does not frequently perform communication between the electronic devices. If the charging device is able to acquire the remaining battery level information on the electronic device having a low remaining battery level without omission, it is expected that each of the electronic devices is managed more appropriately. Accordingly, the fifth embodiment provides a means to provide the remaining battery level information to the charging device by reducing consumption of the battery provided in the electronic device in which the remaining battery level has been reduced to a level less than a predetermined threshold.

### (Electronic device)

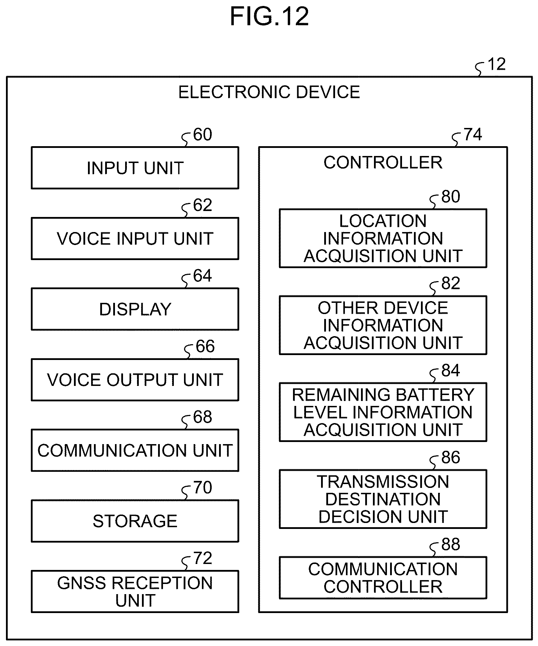

An example of a configuration of an electronic device according to the fifth embodiment will be described with reference to FIG. 12. FIG. 12 is a block diagram illustrating an example of the configuration of the electronic device according to the fifth embodiment.

As illustrated in FIG. 12, the electronic device 12 includes an input unit 60, a voice input unit 62, a display 64, a voice output unit 66, a communication unit 68, a storage 70, a global navigation satellite system (GNSS) reception unit 72, and a controller 74.

The input unit 60 receives various kinds of operations performed on the electronic device 12. The input unit 60 is implemented by, for example, various kinds of input devices that may be a switch, a button, a touch panel, or the like.

The voice input unit 62 detects a voice of the user who uses the electronic device 12. The voice input unit 62 changes the detected voice to a voice signal. The voice input unit 62 implemented by a microphone.

The display 64 displays various kinds of information. The display 64 is implemented by a display including, for example, a liquid crystal display, an organic electro-luminescence (EL) display, or the like.

The voice output unit 66 is a speaker that outputs various kinds of voices. The voice output unit 66 outputs, for example, a voice of a communication partner.

The communication unit 68 is a communication interface that performs communication between the electronic device 12 and the external device. The communication unit 68 performs communication between, for example, the electronic device 12 and the charging device 10. The communication unit 68 performs communication between, for example, the electronic device 12 and the other electronic device 12. the communication unit 68 receives the communication signal of the voice communication between the other electronic devices 12. The communication signal is, for example, a voice signal or a data signal. The communication unit 68 is implemented by, for example, long distance wireless communication, a wireless LAN, Wi-Fi (registered trademark), or the like.

The storage 70 stores therein various kinds of information. The storage 70 stores therein information that indicates, for example, a threshold of the remaining battery level. The storage 70 stores therein, for example, location information on the other electronic devices 12. The storage 70 stores therein information on content of the arithmetic calculation performed in the controller 74, information on a program, and the like. The storage 70 includes at least one of, for example, a main storage device, such as a RAM or a ROM, and an external storage device, such as an HDD.

The GNSS reception unit 72 is configured by a GNSS receiving apparatus that receives a GNSS signal output from GNSS satellites. The GNSS reception unit 72 outputs the periodically received GNSS signals to a location information acquisition unit 80 included in the controller 74.

The controller 74 controls each of the units included in the electronic device 12. The controller 74 includes, for example, an information processing apparatus that may be a CPU, an MPU, or the like, and storage device that may be a RAM, a ROM, or the like. The controller 74 executes a program for controlling an operation of the electronic device 12 according to the present disclosure. The controller 74 may be implemented by, for example, an integrated circuit that may be an ASIC, an FPGA, or the like. The controller 74 may also be implemented by a combination of hardware and software.

The controller 74 includes the location information acquisition unit 80, an other device information acquisition unit 82, a remaining battery level information acquisition unit 84, a transmission destination decision unit 86, and a communication controller 88.

The location information acquisition unit 80 acquires current location information on the electronic device 12 that is the own electronic device. Specifically, the location information acquisition unit 80 acquires the current location information on the own electronic device 12 based on the GNSS signals that has been received by the GNSS reception unit 72.

The other device information acquisition unit 82 acquires various kinds of information on the other electronic device 12 that is the other device. The other device information acquisition unit 82 acquires an identifier, the location information, and the remaining battery level information that indicates the remaining battery level, that are included in the voice signal and the like that has been transmitted by the other electronic device 12 and that has been received by the communication unit 68. The other device information acquisition unit 82 causes the storage 70 to store, in an associated manner, the identifier on the other electronic device 12 and the location information on the other electronic device 12.

The remaining battery level information acquisition unit 84 acquires the remaining battery level information that indicates the current remaining battery level of the electronic device 12. The remaining battery level information acquisition unit 84 determines, based on the acquired remaining battery level information, whether or not the remaining battery level of the electronic device 12 is less than the threshold that has been set in advance.

The transmission destination decision unit 86 determines the other electronic device 12 that corresponds to a transmission destination of the remaining battery level information on the own electronic device. In a case where the multiple electronic devices 12 are present, the transmission destination decision unit 86 determines the other electronic device 12 that is located at the shortest distance from the own electronic device as the transmission destination based on the location information on the own electronic device acquired by the location information acquisition unit 80 and based on the location information on the multiple electronic devices 12 stored in the storage 70.

The communication controller 88 controls the communication unit 68, and performs communication with the external device. In a case where the communication controller 88 makes a voice call with, for example, the other electronic device 12, the communication controller 88 causes the communication unit 68 to transmit, to the other electronic device 12 at a normal transmission output, a communication signal that contains therein the identifier of the own electronic device, the location information that has been detected by the location information acquisition unit 80, and the remaining battery level information that has been acquired by the remaining battery level information acquisition unit 84. In a case where, for example, the remaining battery level of the own electronic device is less than the threshold, the communication controller 88 causes the communication unit 68 to transmit an information transfer request signal (notification signal) that includes the identifier of the own electronic device and the remaining battery level information that has been acquired by the remaining battery level information acquisition unit 84 to the other electronic device 12 determined by the transmission destination decision unit 86, at a minimum required transmission output capable of transmission to the other electronic device 12.

### (Process performed in charging system)

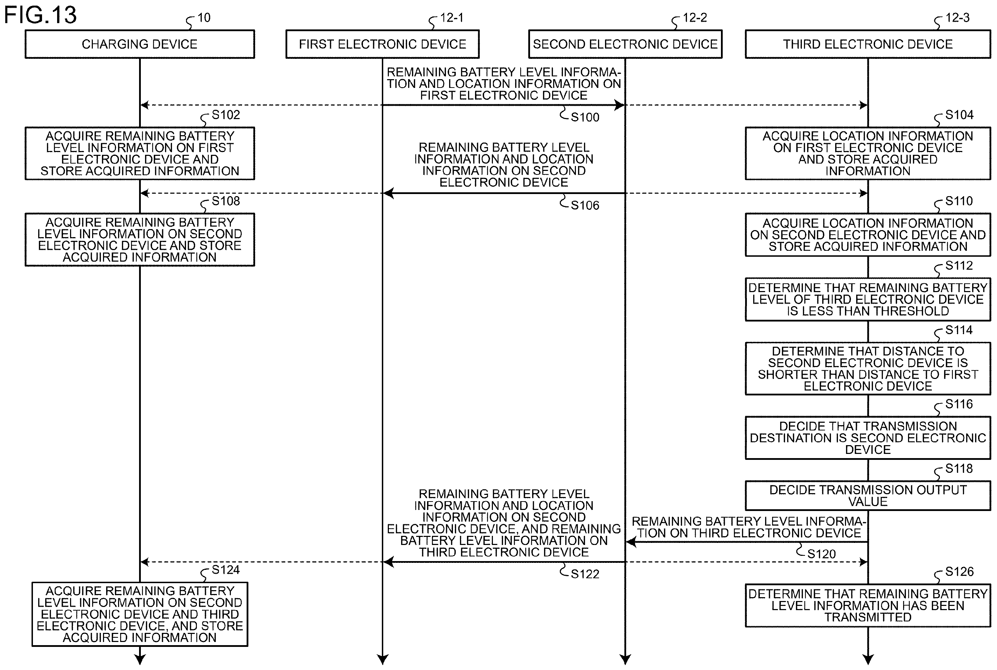

A flow of processes performed in a charging system according to the fifth embodiment will be described with reference to FIG. 13. FIG. 13 is a sequence diagram illustrating a flow of the processes performed in the charging system according to the fifth embodiment.

FIG. 13 illustrates processes performed among the charging device 10, a first electronic device 12-1, a second electronic device 12-2, and a third electronic device 12-3. Specifically, FIG. 13 illustrates the processes of transmitting the remaining battery level information by the third electronic device 12-3 when the first electronic device 12-1 and the second electronic device 12-2 is making a voice call. The configuration of each of the first electronic device 12-1, the second electronic device 12-2, and the third electronic device 12-3 is the same as that of the electronic device 12 illustrated in FIG. 12.

When the first electronic device 12-1 performs communication with the second electronic device 12-2, the first electronic device 12-1 incudes the identifier of the first electronic device 12-1, the current remaining battery level information on the first electronic device 12-1, and the current location information on the first electronic device 12-1 in a communication signal (a voice signal or a data signal) that is to be transmitted to the second electronic device 12-2, and then transmits the communication signal to the second electronic device 12-2 (Step S100).

The charging device 10 receives the communication signal that has been transmitted by the first electronic device 12-1 to the second electronic device 12-2, acquires the identifier of the first electronic device 12-1 and the remaining battery level information on the first electronic device 12-1, and stores the acquired identifier and the information in the electronic device information 24a in the storage 24 (Step S102).

The third electronic device 12-3 receives the communication signal that has been transmitted by the first electronic device 12-1 to the second electronic device 12-2, acquires the identifier of the first electronic device 12-1 and the location information on the first electronic device 12-1, and stores the acquired identifier and the location information in the storage 70 (Step S104).

When the second electronic device 12-2 performs communication with the first electronic device 12-1, the second electronic device 12-2 includes the identifier of the second electronic device 12-2, the current remaining battery level information on the second electronic device 12-2, and the current location information on the second electronic device 12-2 in the communication signal that is to be transmitted to the first electronic device 12-1, and then transmits the communication signal to the first electronic device 12-1 (Step S106).

The charging device 10 receives the communication signal that has been transmitted by the second electronic device 12-2 to the first electronic device 12-1, acquires the identifier of the second electronic device 12-2 and the remaining battery level information on the second electronic device 12-2, and stores the acquired identifier and the remaining battery level information in the electronic device information 24a in the storage 24 (Step S108).

The third electronic device 12-3 receives the communication signal that has been transmitted by the second electronic device 12-2 to the first electronic device 12-1, acquires the identifier of the second electronic device 12-2 and the location information on the second electronic device 12-2, and stores the acquired identifier and the location information in the storage 70 (Step S110).

The third electronic device 12-3 determines that the remaining battery level of the third electronic device 12-3 is less than the threshold (Step S112). For example, the remaining battery level value that is estimated to be difficult for transmitting to the other electronic device for five minutes or more at the normal transmission output value is set as a threshold.

The third electronic device 12-3 determines that a distance from the third electronic device 12-3 to the second electronic device 12-2 is shorter than a distance from the third electronic device 12-3 to the first electronic device 12-1, based on the location information on the own electronic device and the acquired location information on the first electronic device 12-1 and the second electronic device 12-2 (Step S114). The third electronic device 12-3 decides that the transmission destination of the remaining battery level information is the second electronic device 12-2 that is located closer to the own electronic device (Step S116). The third electronic device 12-3 decides the transmission output value at a time of transmission of the remaining battery level information by the communication unit 68 based on the distance to the second electronic device 12-2 (Step S118). The transmission output value is decided to be, for example, a minimum necessary value for the communication signal transmitted from the third electronic device 12-3 with which the second electronic device 12-2 is able to receive the communication signal without any problems. For example, the relationship between the transmission output value and the distance between the electronic devices that are able to receive information without any problems is measured in advance and stored in the storage 70. The third electronic device 12-3 transmits an information transfer request signal that includes the identifier of the third electronic device 12-3 and the remaining battery level information on the third electronic device 12-3 as an information transfer request signal to the second electronic device 12-2 assigned to be the destination (Step S120).

The second electronic device 12-2 that has received the information transfer request signal includes, at the time of subsequent communication with the first electronic device 12-1, the identifier of the third electronic device and the remaining battery level information on the third electronic device 12-3 that are received at Step S120 in the communication signal to be transmitted to the first electronic device 12-1, in addition to the identifier of the second electronic device 12-2, the current remaining battery level information on the second electronic device 12-2, and the current location information on the second electronic device 12-2, and then transmits the communication signal to the first electronic device 12-1 (Step S122).

The charging device 10 receives the communication signal that has been transmitted by the second electronic device 12-2 to the first electronic device 12-1, acquires the remaining battery level information on the second electronic device 12-2 and the remaining battery level information on the third electronic device 12-3, and then stores the acquired information in the electronic device information 24a in the storage 24 (Step S124). As a result of this, in a case where the remaining battery level becomes less than the threshold, the third electronic device 12-3 is able to transmit the remaining battery level information on the third electronic device 12-3 to the charging device 10 while reducing an amount of battery consumption in the own electronic device. Then, the charging device 10 is able to know that the remaining battery level of the third electronic device 12-3 that does not frequently perform communication becomes shortage.

The third electronic device 12-3 receives the communication signal that has been transmitted by the second electronic device 12-2 to the first electronic device 12-1, and determines, in a case where the identifier of the third electronic device 12-3 and the remaining battery level information on the third electronic device 12-3 are included in the communication signal, that the remaining battery level information on the third electronic device 12-3 has been transmitted to the charging device 10 (Step S126). Then, the process illustrated in FIG. 13 has been completed.

### (First process performed in electronic device)

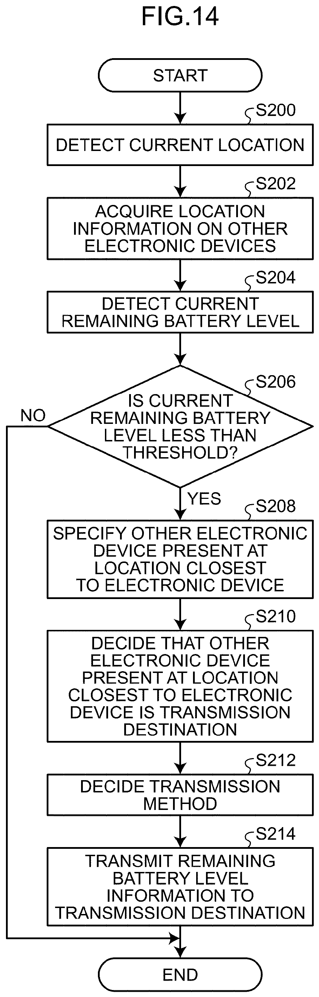

A flow of a first process performed in an electronic device according to the fifth embodiment will be described with reference to FIG. 14. FIG. 14 is a flowchart illustrating a flow of the first process performed in the electronic device according to the fifth embodiment.

FIG. 14 illustrates a process performed by the electronic device 12 in which the remaining battery level is less than the threshold. For example, regarding the electronic device 12 that does not frequently make a voice call with the other electronic device 12 and for which the charging device 10 has not been able to acquire the remaining battery level information, the process is performed in order to notify the charging device 10 that the remaining battery level of the other electronic device 12 is low.

The location information acquisition unit 80 detects the current location of the electronic device 12 based on the GNSS signals that have been received by the GNSS reception unit 72 (Step S200). Then, the process proceeds to Step S202.

The other device information acquisition unit 82 acquires pieces of location information on the multiple other electronic devices 12 that are included in the communication signal transmitted by the multiple other electronic devices 12 and that has been received by the communication unit 68 (Step S202). Specifically, the other device information acquisition unit 82 acquires the identifiers and the pieces of location information on the multiple other electronic devices 12. The other device information acquisition unit 82 causes the storage 70 to store, in an associated manner, the identifiers and the pieces of location information on the multiple other respective electronic devices 12. Then, the process proceeds to Step S204.

The remaining battery level information acquisition unit 84 detects the current remaining battery level of each of the electronic devices 12 (Step S204). Then, the process proceeds to Step S206.

The remaining battery level information acquisition unit 84 determines whether or not the current remaining battery level of the electronic device 12 is less than the threshold that has been set in advance (Step S206). Specifically, the remaining battery level information acquisition unit 84 determines whether or not the current remaining battery level of the electronic device 12 is less than the threshold that has been set in advance based on the remaining battery level that has been detected by the remaining battery level information acquisition unit 84 and based on the threshold of the remaining battery level stored in advance in the storage 70. If it is determined that the current remaining battery level is less than the threshold that has been set in advance (Yes at Step S206), the process proceeds to Step S208. If it is not determined that the current remaining battery level is less than the threshold that has been set in advance (No at Step S206), the process illustrated in FIG. 14 has been completed.

The transmission destination decision unit 86 specifies the other electronic device 12 that is present at a location closest to the electronic device 12 based on the current location of the electronic device 12 detected by the location information acquisition unit 80 and based on the location information on the other electronic device 12 acquired by the other device information acquisition unit 82 (Step S208). Then, the process proceeds to Step S210.

The transmission destination decision unit 86 decides that the other electronic device 12 that is present at the location closest to the electronic device 12 is the transmission destination of the remaining battery level information on the own electronic device (Step S210). Then, the process proceeds to Step S212.

The transmission destination decision unit 86 decides a transmission method for transmitting the remaining battery level information on the electronic device 12 based on the distance to the electronic device 12 specified as the transmission destination at Step S208 (Step S212). The transmission destination decision unit 86 decides the transmission output value of the communication unit 68 based on, for example, the distance to the electronic device 12 that is the transmission destination. Then, the process proceeds to Step S214.

The communication controller 88 transmits the identifier and the remaining battery level information related to the electronic device 12 as the information transfer request signal in which the electronic device has been assigned as the destination (Step S214). Then, the process illustrated in FIG. 14 has been completed.

### (Second process performed in electronic device)

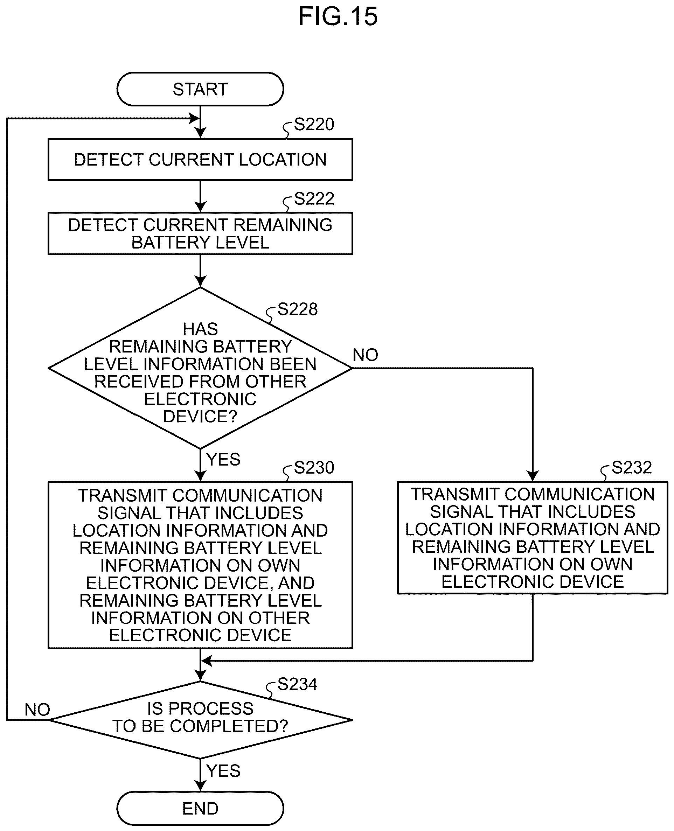

A flow of a second process performed in the electronic device according to the fifth embodiment will be described with reference to FIG. 15. FIG. 15 is a flowchart illustrating a flow of the second process performed in the electronic device according to the fifth embodiment.

FIG. 15 illustrates processes that is performed in a case where, for example, the electronic device 12 that is making a voice call has received the information transfer request signal that has been transmitted from the other electronic device 12 that is other than the communication partner of the voice call to the own electronic device and that includes the identifier and the remaining battery level information on the other electronic device 12.

The location information acquisition unit 80 detects the current location of the electronic device 12 based on the GNSS signals received by the GNSS reception unit 72 (Step S220). Then, the process proceeds to Step S222.

The remaining battery level information acquisition unit 84 detects the current remaining battery level of the electronic device 12 (Step S222). Then, the process proceeds to Step S228.

The communication controller 88 determines whether or not the information transfer request signal that is transmitted from the other electronic device 12 to the own electronic device as the destination and that includes the identifier and the remaining battery level information on the other electronic device 12 has been received by using one of the communication modes provided in the communication unit 68 (Step S228). If it is determined that the information transfer request signal has been received from the other electronic device 12 (Yes at Step S228), the process proceeds to Step S230. If it is not determined that the information transfer request signal has been received from the other electronic device 12 (No at Step S228), the process proceeds to Step S232.

If it is determined to be Yes at Step S230, the communication controller 88 transmits, to the other electronic device 12 that is the communication destination, the communication signal that includes the identifier and the remaining battery level information on the other electronic device 12 that are included in the information transfer request signal received from the other electronic device 12 to the own electronic device, in addition to the identifier of the own electronic device, the current location information on the own electronic device, and the remaining battery level information on the own electronic device (Step S230). The communication signal that is transmitted at Step S230 is, for example, a voice call made with the electronic device 12 that is the communication destination. By receiving the communication signal transmitted at Step S230, the charging device 10 is able to acquire the identifier and the remaining battery level information on the electronic device 12 that has transmitted the information transfer request signal. Then, the process proceeds to Step S234.

If it is determined to be No at Step S228, the communication controller 88 transmits the communication signal that includes the identifier of the own electronic device, the current location information on the own electronic device, and the remaining battery level information on the own electronic device to the other electronic device 12 that is the communication destination (Step S232). The communication signal transmitted at Step S232 is, for example, a voice call that is made with the electronic device 12 that is the communication destination. Then, the process proceeds to Step S234.

The controller 74 determines whether or not the process is to be completed (Step S234). If, for example, the voice call with the communication destination has been completed, or if, for example, an operation to turn off a power supply has been received, the controller 74 determines that the process is to be completed. If it is determined that the process is to be completed (Yes at Step S234), the controller 74 completes the process illustrated in FIG. 15. If it is not determined that the process is to be completed (No at Step S234), the process proceeds to Step S220 and is repeated.

As described above, in the fifth embodiment, in a case where the remaining battery level of the electronic device other than the electronic device that is making the voice call becomes less than the threshold, the charging device is able to acquire the remaining battery level information on the subject electronic device. As a result of this, in the fifth embodiment, it is possible to appropriately manage the remaining battery level of the electronic device included in the charging system.

### [modification of the fifth embodiment]

### (Electronic device)

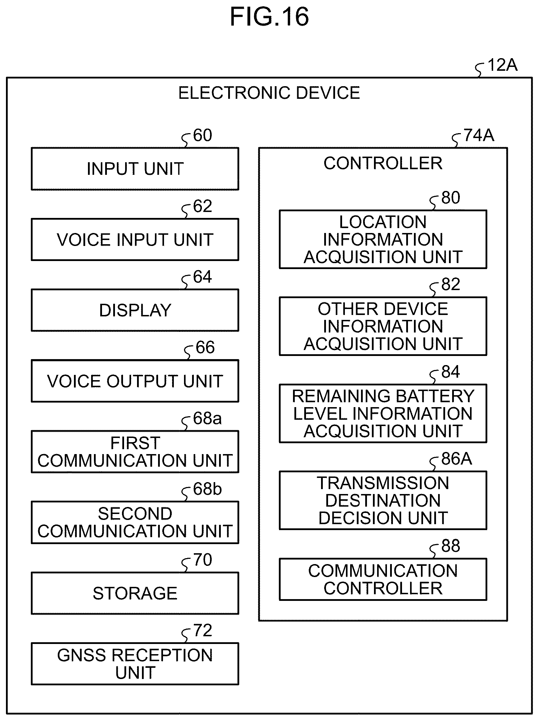

An example of a configuration of an electronic device according to a modification of the fifth embodiment will be described with reference to FIG. 16. FIG. 16 is a block diagram illustrating an example of a configuration of the electronic device according to the modification of the fifth embodiment.

As illustrated in FIG. 16, an electronic device 12A is different from the electronic device 12 illustrated in FIG. 12 in that the electronic device 12A includes a first communication unit 68a and a second communication unit 68b.

The first communication unit 68a is a communication unit that performs long distance wireless communication. The long distance wireless communication may be exemplified by, for example, communication performed by using digital business radio or communication performed by using a mobile phone network or the like, but the long distance wireless communication is not limited to these examples.

The second communication unit 68b is a communication unit that performs short distance wireless communication. The short distance wireless communication may be exemplified by, for example, communication performed by using Wi-Fi (registered trademark) or Bluetooth (registered trademark), but the short distance wireless communication is not limited to these examples.

A transmission destination decision unit 86A included in a controller 74A selects which of the communication units between the first communication unit 68a and the second communication unit 68b to be used for transmission of the remaining battery level information. In a case where, for example, the distance to the other electronic device is within a communication range of the second communication unit 68b, the transmission destination decision unit 86A selects the second communication unit 68b as the communication unit that transmits the remaining battery level information.

At Step S212 illustrated in FIG. 14, the transmission destination decision unit 86A may select one of the first communication unit 68a and the second communication unit 68b by comparing an electrical power consumption value of the first communication unit 68a with that of the second communication unit 68b to be used at the time of transmission of the remaining battery level information. Specifically, regarding the first communication unit 68a and the second communication unit 68b, the relationship between the distance at which the electronic device 12 located at the transmission destination is able to receive the information without any problems and the electrical power consumption value for the transmission is measured in advance and stored in the storage 70. The transmission destination decision unit 86A decides the communication method for the lowest electrical power consumption value and the lowest transmission output value based on the distance to the electronic device 12 that is the transmission destination.

As described above, in the modification of the fifth embodiment, by comparing the transmission output value of the first communication unit with that of the second communication unit, it is possible to transmit the remaining battery level information to the other electronic device by using the method that consumes less electrical power consumption at the time of transmission of the remaining battery level information. As a result of this, in the modification of the fifth embodiment, even in a state of the lower remaining battery level, it is possible to appropriately transmit the remaining battery level information to the other electronic device.

Each of the components of the respective devices illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. Furthermore, the configurations constituted by separating or integrating the units may be dynamically performed.

In the above, the embodiment of the present disclosure has been described, but the embodiment is not limited to the content of the embodiment. The components described above include one that can easily be thought of by a person skilled in the art and one that is practically identical. Further, the configurations described above may be combined appropriately that is one so called equivalents. Furthermore, various omissions, replacements, and modifications of the components may be made within the scope of the above described embodiment.

The present disclosure includes items that contribute to implementation of "Concrete measures to combat climate change" of the Sustainable Development Goals (SDGs) and contribute to the reduction in GHG emissions.

### Industrial Applicability

the charging device, the electronic device, the charging system, the charging method and the communication method according to the present disclosure are able to be used for a portable type charging device that charges an electronic device having a communication function and for an electronic device having a communication function.

### Reference Signs List

1 charging system
10 charging device
12, 12A electronic device
12a, 12b wireless terminal
20 charging unit
22, 68 communication unit
24a electronic device information
26, 64 display
28 operating unit
30 measurement unit
32, 74, 74A controller
40 charging controller
42 communication controller
44 operation controller
46 remaining electrical power value information acquisition unit
48 electronic device information acquisition unit
50 charging target information acquisition unit
52 charging management unit
54 notification unit
60 input unit
62 voice input unit
66 voice output unit
68a first communication unit
68b second communication unit
80 location information acquisition unit
82 other device information acquisition unit
84 remaining battery level information acquisition unit
86, 86A transmission destination decision unit
88 communication controller

## Claims

1. A charging device comprising:
a charging unit configured to charge an electronic device;
a remaining electrical power value information acquisition unit configured to acquire information on a remaining electrical power value of a rechargeable battery provided in the own charging device;
an electronic device information acquisition unit configured to acquire electronic device information that includes identification information on the electronic device and information on a remaining battery level value of a battery provided in the electronic device from each of the electronic devices through wireless communication;
a charging target information acquisition unit configured to acquire, when a charging target device among the electronic devices is connected to the charging unit, charging target information that includes at least the identification information on the charging target device; and
a charging management unit configured to generate charging information that includes battery charging priority related to charging of the charging target device based on the information on the remaining electrical power value, the electronic device information, and the identification information included in the charging target information.

2. The charging device according to claim 1, wherein, when there is another electronic device with the remaining battery level value that is lower than the remaining battery level value of the charging target device that is connected to the own charging device as compared with pieces of electronic device information that have been acquired by the charging target information acquisition unit, the charging management unit is further configured to determine that the battery charging priority of the another electronic device is higher than that of the charging target device, and generate the charging information including charging electrical power that is needed for the another electronic device based on the remaining battery level value included in the electronic device information.

3. The charging device according to claim 1 or 2, further comprising:
a display configured to provide information to a user,
an operating unit configured to receive an operation from the user, and
a charging controller configured to control charging for the charging target device, wherein
the charging management unit is further configured to cause the display to display the charging target information including the battery charging priority, and
the charging controller is further configured to start charging to the charging target device based on a selection operation by the user received by the operating unit.

4. The charging device according to claim 1 or 2, wherein
the charging management unit is further configured to determine whether or not the remaining battery level value of the charging target device is equal to or less than a predetermined value based on the electronic device information and the charging target information, and
the charging device further comprises a charging controller configured to start charging to the charging target device when it is determined by the charging management unit that the remaining battery level value of the charging target device is equal to or less than the predetermined value.

5. An electronic device comprising:
a location information acquisition unit configured to acquire location information on the own electronic device;
a remaining battery level information acquisition unit configured to acquire information on a remaining battery level value of a battery provided in the own electronic device;
a communication unit configured to receive communication signals that include identifiers of other electronic devices communicated thereamong and the location information on the other electronic devices;
a communication controller configured to control the communication unit to cause the communication unit to transmit a communication signal that includes the identifier of the own electronic device and the information on the remaining battery level value of the own electronic device; and
a transmission destination decision unit configured to select, when the remaining battery level value of the own electronic device is less than a threshold that is set in advance, the other electronic device located at a shortest distance from the own electronic device as a transmission destination electronic device based on the location information on the own electronic device located at a time point when the remaining battery level value of the own electronic device becomes less than the threshold and based on the location information on the other electronic device, wherein
the communication controller is further configured to:
decide a transmission output value of the communication unit based on the distance from the transmission destination electronic device, and
cause the communication unit to transmit a notification signal that includes the identifier of the own electronic device and the information on the remaining battery level value of the own electronic device from the communication unit to the transmission destination electronic device at the decided transmission output value.

6. A charging system comprising:
a charging device;
electronic devices that are able to communicate with the charging device, wherein
the charging device includes:
a charging unit configured to charge the electronic device,
a remaining electrical power value information acquisition unit configured to acquire information on a remaining electrical power value of a rechargeable battery provided in the own charging device,
an electronic device information acquisition unit configured to acquire electronic device information that includes identification information on the electronic device and information on a remaining battery level value of a battery provided in the electronic device from each of the electronic devices through wireless communication,
a charging target information acquisition unit configured to acquire, when a charging target device among the electronic devices is connected to the charging unit, charging target information that includes at least the identification information on the charging target device, and
a charging management unit configured to generate charging information that includes battery charging priority related to charging of the charging target device based on the information on the remaining electrical power value, the electronic device information, and the identification information included in the charging target information.

7. A charging method comprising:
a step of acquiring information on a remaining electrical power value of a rechargeable battery provided in a charging device;
a step of acquiring, from each of electronic devices through wireless communication, electronic device information that includes identification information on the electronic device and information on a remaining battery level value of a battery provided in the electronic device;
a step of acquiring, when a charging target device among the electronic devices is connected to the charging device that performs charging the charging target device, charging target information that includes identification information on the charging target device and information on the remaining battery level value on the charging target device; and
a step of generating charging information that includes battery charging priority related to charging of the charging target device based on the information on the remaining electrical power value, the electronic device information, and the identification information included in the charging target information.

8. A communication method on an electronic device comprising:
a step of acquiring location information on the own electronic device;
a step of acquiring information on a remaining battery level value of a battery provided in the own electronic device;
a step of receiving, by a communication unit, communication signals transmitted by the other electronic device that include identifiers of other electronic devices and location information on the other electronic devices;
a step of controlling the communication unit to cause the communication unit to transmit the communication signal that includes the identifier of the own electronic device and the information on the remaining battery level value of the own electronic device;
a step of selecting, when the remaining battery level value of the own electronic device is less than a threshold that is set in advance, the other electronic device located at a shortest distance from the own electronic device as a transmission destination electronic device based on the location information on the own electronic device located at a time point when the remaining battery level value of the own electronic device becomes less than the threshold and based on the location information on the other electronic device; and
a step of deciding a transmission output value of the communication unit based on a distance from the transmission destination electronic device, and causing the communication unit to transmit a notification signal that includes the identifier of the own electronic device and the information on the remaining battery level value of the own electronic device from the communication unit to the transmission destination electronic device at the decided transmission output value.
